# EUROPEAN PATENT APPLICATION

(11) **EP 3 336 617 A1**
(43) Date of publication of application: **20.06.2018**
(21) Application number: 16842157.6
(22) Date of filing: 18.08.2016
(51) Int. Cl.: G04G 19/00, H02J 7/02, H02J 7/00

(54) **CRADLE FOR WIRELESS CHARGING AND ELECTRONIC DEVICE APPLIED TO SAME**

(30) Priority: 02.09.2015 KR 20150124491
(71) Applicant: Samsung Electronics Co., Ltd., Suwon-si, Gyeonggi-do 16677 (KR)
(72) Inventor: BAE, Changseok, Yongin-si Gyeonggi-do 16866 (KR); KIM, Seungyeon, Bucheon-si Gyeonggi-do 14581 (KR); WEE, Jongcheon, Yongin-si Gyeonggi-do 16808 (KR); CHOI, Hwanseok, Hwaseong-si Gyeonggi-do 18413 (KR); PARK, Jung-Su, Suwon-si Gyeonggi-do 16543 (KR); LEE, Kyunghwan, Seoul 06335 (KR); LEE, Junhui, Hwaseong-si Gyeonggi-do 18456 (KR); JUNG, Woojin, Yongin-si Gyeonggi-do 16944 (KR); JUNG, Chung-Hyo, Suwon-si Gyeonggi-do 16582 (KR); YOON, Byoung-Uk, Hwaseong-si Gyeonggi-do 18437 (KR)
(74) Representative: Nederlandsch Octrooibureau
(86) International application number: PCT/KR2016/009057
(87) International publication number: WO 2017/039191

(57) **Abstract**

According to various embodiments, an electronic device configured to enable an external electronic device to be detachably mounted may include a housing, a power interface included in the housing and configured to be able to receive power from an external power source, a conductive pattern electrically coupled to the power interface and configured to be able to transmit power in a wirelessly fashion, and a plurality of members disposed around the conductive pattern and attracted by a magnet. Other various embodiments are also possible.

## Description

### Technical Field

Various embodiments of the present disclosure relate to a wireless charging cradle and an electronic device applied thereto.

### Background Art

The development of electronic devices has recently applied to various fields closely related to everyday lives. In particular, among the electronic devices, a portable electronic device has become the most essential necessity of everyday lives.

Since the electronic devices are launched in various sizes according to functions thereof and users' preferences, an outer appearance of the electronic devices has also become important in addition to compact sizes and functions of the devices. Even if the electronic devices have almost the same functions as devices of other vendors, an electronic device having a superior function and an elegant design is more preferred by a user.

According to various embodiments, manufacturers of a terminal must also provide a cradle for charging a power source (e.g., a battery pack) equipped in the electronic device and for transmitting/receiving data with respect to an external device (e.g., a Personal Computer (PC), etc.). Therefore, convenience of use also needs to be improved for the cradle.

### Disclosure of Invention

### Technical Problem

According to various embodiments, a method for charging a battery of an electronic device may include a wired charging method and a wireless charging method. In the wired charging method, the battery of the electronic device may be charged by physically connecting a connector of a charging device (e.g., a Traveler Adaptor (TA)) directly to a connector port additionally provided to the outside of the electronic device. The wirelessly charging method is a method in which the battery of the electronic device is charged without an additional charging line by using a magnetic induction scheme or a magnetic resonance scheme. In this method, a charging operation may be performed in a state where the electronic device is placed on a charging pad of an additionally provided wireless charging device.

According to various embodiments, a wireless charging device (e.g., a cradle) exhibits excellent charging efficiency only when a power transmission coil member included therein and a power reception coil member included in the electronic device are aligned correspondingly. Therefore, it is important that the electronic device is correctly aligned and mounted to the wireless charging device. For example, in wireless charging, incorrect alignment of the electronic device may lead to poor charging, heat generation, or the like, which directly results in deterioration of product reliability.

According to various embodiments of the present disclosure, it is possible to provide a wireless charging cradle and an electronic device applied thereto.

According to various embodiments, it is possible to provide a wireless charging cradle in which an alignment position can be guided such that an electronic device is arranged to a correct charging position even if a user does not pay special attention, and the electronic device applied thereto.

According to various embodiments, it is possible to provide a wireless charging cradle configured to be freely chargeable regardless of directivity of an electronic device, and the electronic device applied thereto.

### Solution to Problem

According to various embodiments, a wearable electronic device may include a housing including a first side and a second side facing the first side, a coupling member coupled to a portion of the housing and configured to detachably couple the electronic device to a portion of a user's body, a display exposed through the first side of the housing, a conductive pattern disposed between the first and second sides of the housing and configured to be able to receive power from the outside in a wirelessly fashion, and a plurality of members disposed around the conductive pattern and attracted by a magnet.

According to various embodiments, an electronic device configured to enable an external electronic device to be detachably mounted may include a housing, a power interface included in the housing and configured to be able to receive power from an external power source, a conductive pattern electrically coupled to the power interface and configured to be able to transmit power in a wirelessly fashion, and a plurality of members disposed around the conductive pattern and attracted by a magnet.

According to various embodiments, a system for wirelessly transmitting/receiving power between electronic devices may include a first electronic device including a first housing, a first conductive pattern disposed inside the first housing and configured to be able to wirelessly transmit power to the outside, and a plurality of first members attracted by a magnet disposed around the first conductive pattern and a second electronic device including a second housing, a second conductive pattern disposed inside the second housing and configured to be able to wirelessly receive power from the outside, and a plurality of second members attracted by a magnet disposed around the second conductive pattern. The system may be configured such that power transmitted through the first conductive pattern of the first electronic device is received by the second electronic device through the second conductive pattern of the second electronic device, and the first electronic device and the second electronic device are arranged to be closely in contact with each other since at least a part of the plurality of first members of the first electronic device and at least a part of the plurality of second members of the second electronic device are attracted to each other by a magnetic force.

### Advantageous Effects of Invention

According to various embodiments, an alignment position for wireless charging can be correctly guided by roughly disposing an electronic device to a cradle without special attention of a user, and unconstrained charging can be provided to the user since charging is not restricted by a placement direction.

### Brief Description of Drawings

FIG. 1 illustrates a network environment including an electronic device according to various embodiments of the present disclosure;
FIG. 2 is a block diagram of an electronic device according to various embodiments of the present disclosure;
FIG. 3A is a perspective view illustrating a state before an electronic device is mounted to a cradle according to various embodiments of the present disclosure;
FIG. 3B is a rear view of a cradle according to various embodiments of the present disclosure;
FIG. 3C is a perspective view illustrating a state where an electronic device is mounted to a cradle according to various embodiments of the present disclosure;
FIG. 4A is an exploded perspective view of a cradle according to various embodiments of the present disclosure;
FIG. 4B is an exploded perspective view of an electronic device according to various embodiments of the present disclosure;
FIG. 5A and FIG. 5B illustrate an arrangement relation of magnets installed in a cradle according to various embodiments of the present disclosure;
FIG. 6A and FIG. 6B illustrate an arrangement relation of magnets installed in an electronic device according to various embodiments of the present disclosure;
FIG. 7A to FIG. 7C illustrate a corresponding relation of magnets when an electronic device is normally mounted to a cradle with respect to a mounting direction according to various embodiments of the present disclosure;
FIG. 8A to FIG. 8C illustrate a corresponding relation of magnets when an electronic device is mounted to a cradle in a state of being rotated by 180 degrees with respect to a mounting direction according to various embodiments of the present disclosure;
FIG. 9A and FIG. 9B are perspective views illustrating essential parts of a cradle, viewed from various directions, in a state where an electronic device is normally mounted to a cradle with respect to a mounting direction according to various embodiments of the present disclosure;
FIG. 10A and FIG. 10B are perspective views illustrating essential parts of a cradle, viewed from various directions, when an electronic device is mounted to a cradle in a state of being rotated by 180 degrees with respect to a mounting direction according to various embodiments of the present disclosure;
FIG. 11 is a perspective view of an electronic device in a state of being mounted to a cradle in a reverse direction according to various embodiments of the present disclosure;
FIG. 12A to FIG. 13 schematically illustrate a state where various shapes of electronic devices are aligned with cradles according to various embodiments of the present disclosure; and
FIG. 14 is a flowchart illustrating an operation of an electronic device, based on whether it is mounted to or dismounted from a cradle according to various embodiments of the present disclosure.

### Best Mode for Carrying out the Invention

Hereinafter, various embodiments of the present disclosure will be described in detail with reference to the attached drawings. It includes various modification, equivalents and/or alternatives to assist in that understanding but these are to be regarded as merely exemplary. Like numbers refer to like elements throughout the accompany drawings.

Herein, terms such as "have," "may have," "include," and "may include" indicate the presence of corresponding features (e.g., elements such as numerical values, functions, operations, or parts), but do not preclude the presence of additional features.

The terms "A or B," "at least one of A or/and B," and "one or more of A or/and B" include all possible combinations of the enumerated items. For example, "A or B," "at least one of A and B," or "at least one of A or B" means (1) at least one A, (2) at least one B, or (3) at least one A and at least one B.

Numerical terms such as "first" and "second" may modify various elements regardless of an order and/or importance of the elements, and do not limit the elements. These terms may be used for the purpose of distinguishing one element from another element. For example, a first user device and a second user device may indicate different user devices, regardless of the order or importance the devices. Accordingly, a first element may be referred to as a second element, and similarly, a second element may be referred to as a first element, without departing from the scope the present disclosure.

When an element (e.g., a first element) is "(operatively or communicatively) coupled with/to" or "connected to" another element (e.g., a second element), the first element may be directly coupled with/to the second element, or there may be an intervening element (e.g., a third element) between the first element and the second element. However, when the first element is "directly coupled with/to" or "directly connected to" the second element, there is no intervening element therebetween.

Herein, the term "module" may indicate a unit including one of hardware, software, and firmware, or a combination thereof. The term "module" may be interchangeably used with terms, such as unit, logic, logical block, component, and circuit. A module may be a minimum unit of an integrally constituted component or may be a part thereof. A module may be a minimum unit for performing one or more functions or may be a part thereof. A module may be mechanically or electrically implemented. For example, a module may include at least one of an application-specific integrated circuit (ASIC) chip, a field-programmable gate array (FPGA), and a programmable-logic device, which are known or will be developed and which perform certain operations.

All of the terms used herein, including technical or scientific terms, have the same meanings as those generally understood by a person having ordinary skill in the related art unless they are defined otherwise. Terms defined in a generally used dictionary should be interpreted as having the same or similar meanings as the contextual meanings of the relevant technology and should not be interpreted as having ideal or exaggerated meanings unless clearly defined as such herein. Even terms defined in the disclosure should not be interpreted as excluding embodiments of the present disclosure.

Electronic devices may include smart phones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) Audio Layer 3 (MP3) players, mobile medical devices, cameras, and/or wearable devices. For example, the wearable devices may include accessory-type wearable devices (e.g., watches, rings, bracelets, anklets, necklaces, glasses, contact lenses, or head-mounted-devices (HMDs)), fabric or clothing integral wearable devices (e.g., electronic clothes), body-mounted wearable devices (e.g., skin pads or tattoos), and/or implantable wearable devices (e.g., implantable circuits).

The electronic devices may be smart home appliances, such as televisions (TVs), digital versatile disk (DVD) players, audio players, refrigerators, air conditioners, cleaners, ovens, microwave ovens, washing machines, air cleaners, set-top boxes, home automation control panels, security control panels, TV boxes (e.g., Samsung HomeSync™, Apple TV™, or Google TV™), game consoles (e.g., Xbox™ and PlayStation™), electronic dictionaries, electronic keys, camcorders, and/or electronic picture frames.

The electronic devices may include various medical devices, such as various portable medical measurement devices (e.g., blood glucose meters, heart rate monitors, blood pressure monitors, thermometers, etc.), magnetic resonance angiography (MRA) devices, magnetic resonance imaging (MRI) devices, computed tomography (CT) devices, scanners, ultrasonic devices, etc., navigation devices, GPS receivers, event data recorders (EDRs), flight data recorders (FDRs), vehicle infotainment devices, electronic equipment for vessels (e.g., navigation systems, gyrocompasses, etc.), avionics, security devices, head units for vehicles, industrial or home robots, automatic teller machines (ATMs), point of sale (POS) devices, and/or Internet of Things (IoT) devices (e.g., light bulbs, sensors, electric or gas meters, sprinkler devices, fire alarms, thermostats, street lamps, toasters, exercise equipment, hot water tanks, heaters, boilers, etc.).

The electronic devices may also include parts of furniture or buildings/structures, electronic boards, electronic signature receiving devices, projectors, or various measuring instruments (e.g., water meters, electricity meters, gas meters, wave meters, etc.). The electronic devices may be flexible electronic devices. The electronic devices may be combinations of the above-described devices. Additionally, the electronic devices are not limited to the above-described devices, and may include new electronic devices according to the development of new technologies.

Herein, the term "user" may refer to a person who uses an electronic device or may refer to a device (e.g., an artificial intelligence (AI) electronic device) which uses an electronic device.

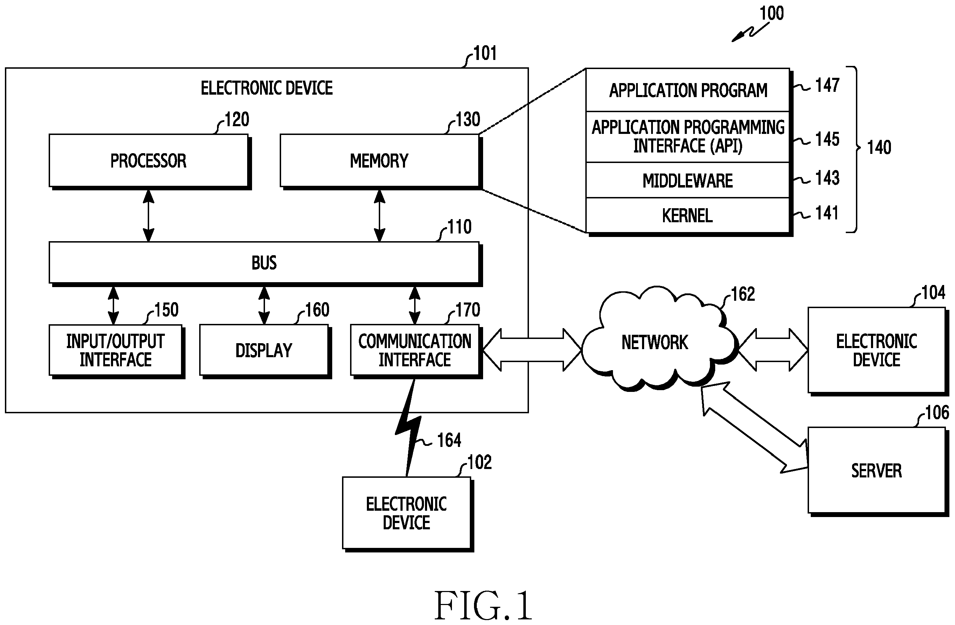

FIG. 1 illustrates a network environment including an electronic device, according to an embodiment of the present disclosure.

Referring to FIG. 1, the network environment includes an electronic device 101, which includes a bus 110, a processor 120, a memory 130, an input/output interface 150, a display 160, and a communication interface 170. Alternatively, the electronic device 101 may omit at least one of the illustrated components and/or include additional components.

The bus 110 may include a circuit for connecting the components and delivering communications such as a control message therebetween.

The processor 120 may include a central processing unit (CPU), an application processor (AP), and/or a communication processor (CP). The processor 120 processes an operation or data on control of and/or communication with another component of the electronic device 101.

The memory 130 may include volatile and/or nonvolatile memory. The memory 130 may store commands or data, such as the reception control list relating to at least another component of the electronic device 101. The memory 130 may store software and/or a program 140. The program 140 includes a kernel 141, middleware 143, an application programming interface (API) 145, and/or application programs (or applications) 147. At least some of the kernel 141, the middleware 143, and the API 145 may be referred to as an operating system (OS).

The kernel 141 may control or manage system resources, such as the bus 110, the processor 120, or the memory 130 used for performing an operation or function implemented by the other programs, such as the middleware 143, the API 145, or the applications 147. Further, the kernel 141 may provide an interface through which the middleware 143, the API 145, or the applications 147 connects the individual elements of the electronic device 101 to control or manage the system resources.

The middleware 143 may function as an intermediary for the API 145 or the applications 147 to communicate with the kernel 141, .e.g., to exchange data.

In addition, the middleware 143 may process one or more task requests received from the applications 147 according to priorities thereof. For example, the middleware 143 assigns priorities for using the system resources of the electronic device 101, to at least one of the applications 147. As another example, the middleware 143 performs scheduling or load balancing on the one or more task requests by processing the one or more task requests according to the priorities assigned thereto.

The API 145 is an interface through which the applications 147 may control functions provided from the kernel 141 or the middleware 143, and may include at least one interface or function, such as an instruction for file control, window control, image processing, or text control.

The input/output interface 150 may function as an interface that transfers instructions or data input from a user or another external device to the other element(s) of the electronic device 101. Further, the input/output interface 150 may output the instructions or data received from the other element(s) of the electronic device 101 to the user or an external electronic device.

The display 160 may include a liquid crystal display (LCD), a light emitting diode (LED) display, an organic LED (OLED) display, a micro electro mechanical system (MEMS) display, an electronic paper display, etc. The display 160 may display various types of content, such as text, images, videos, icons, or symbols. The display 160 may display a web page. The display 160 may include a touch screen, which receives a touch, a gesture, proximity, a hovering input, etc., using an electronic pen or a user's body part (e.g., a finger).

The communication interface 170 may establish communication between the electronic device 101 and a first external electronic device 102, a second external electronic device 104, and/or a server 106. For example, the communication interface 170 communicates with the first external electronic device 102, the second external electronic device 104, and/or the server 106 through the network 162 using wireless communication or wired communication or via a short-range communication 164.

For example, the wireless communication conforms to a cellular communication protocol including at least one of LTE, LTE-advanced (LTE-A), code division multiple access (CDMA), WCDMA, universal mobile telecommunication system (UMTS), wireless broadband (WiBro), and GSM. The wireless communication may short-range communication 164. The short-range communication may include, for example, at least one of a a Wi-Fi(wireless fidelity), a Bluetooth module, NFC(near field communication), and a GNSS(global navigation satellite system module (e.g., a GPS module, a glonass module). The wired communication may include at least one of a universal serial bus (USB), a high definition multimedia interface (HDMI), a recommended standard 232 (RS-232), and a plain old telephone service (POTS). The network 162 may include a telecommunications network, a computer network such as local area network (LAN) or wide area network (WAN), the Internet, and a telephone network.

Each of the first and second external electronic devices 102 and 104 may be the same or different type of device as the electronic device 101. The server 106 may include a group of one or more servers. All or some of the operations to be executed by the electronic device 101 may be executed by the first external electronic device 102, the second external electronic device 104, and/or the server 106. For example, when the electronic device 101 performs a certain function or service (automatically or by request), the electronic device 101 may request some functions that are associated therewith from the first external electronic device 102, the second external electronic device 104, and/or the server 106, instead of or in addition to executing the function or service itself. The first external electronic device 102, the second external electronic device 104, and/or the server 106 may execute the requested functions or additional functions, and may transmit the results to the electronic device 101. The electronic device 101 may provide the requested functions or services by processing the received results. For example, a cloud computing technique, a distributed computing technique, or a client-server computing technique may be used.

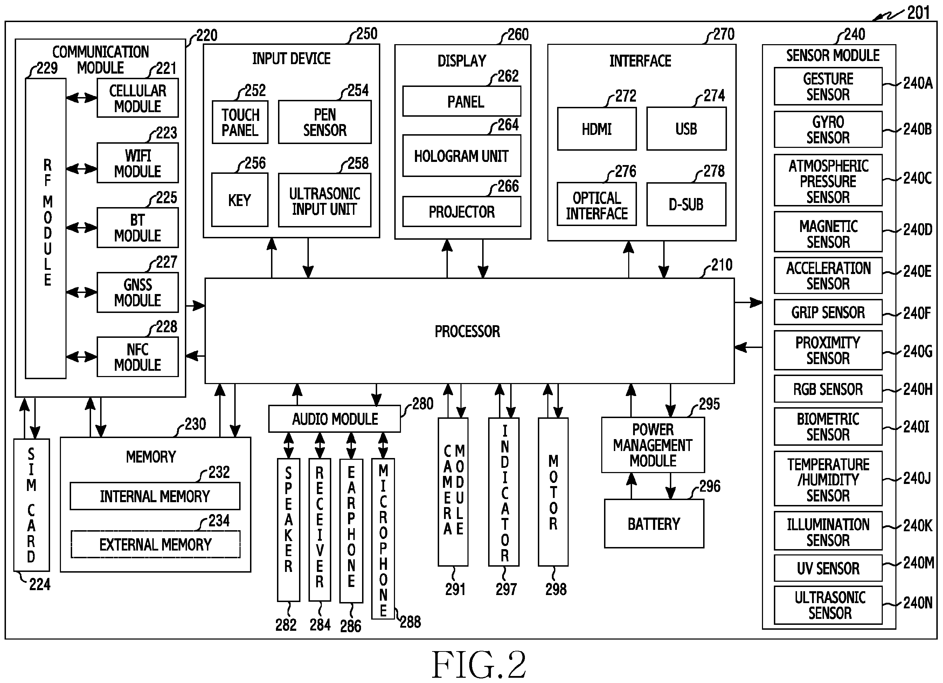

FIG. 2 illustrates an electronic device, according to an embodiment of the present disclosure.

Referring to FIG. 2, the electronic device 201 includes a processor 210, a communication module 220, a subscriber identification module (SIM) card 224, a memory 230, a sensor module 240, an input device 250, a display 260, an interface 270, an audio module 280, a camera module 291, a power management module 295, a battery 296, an indicator 297, and a motor 298.

The processor 210 may control a plurality of hardware or software elements connected to the processor 210 by driving an OS or an application program. The processor 210 may process a variety of data, including multimedia data, perform arithmetic operations, may be implemented with a system on chip (SoC), and may further include a GPU. The processor 210 or the cellular module 221 may load an instruction or data, which is received from each non-volatile memory connected thereto or at least one of different elements, to a volatile memory and processes the instruction or data. In addition, the processor 210 or the cellular module 221 may store data, which is received from at least one of different elements or generated by at least one of different elements, into a non-volatile memory.

The communication module 220 may perform data transmission/reception between an external electronic device and/or a server, which may be connected with the electronic device through a network. The communication module 220 includes a cellular module 221, a Wi-Fi module 223, a Bluetooth® (BT) module 225, a global navigation satellite system (GNSS) or GPS module 227, a near field communication (NFC) module 228, and a radio frequency (RF) module 229.

The cellular module 221 may provide a voice call, a video call, a text service, or an Internet service through a communication network. The cellular module 221 may identify and authenticate the electronic device within the communication network by using the SIM card 224. The cellular module 221 may perform at least some of the functions that can be provided by the processor 210. The cellular module 221 may include a CP.

Each of the Wi-Fi module 223, the BT module 225, the GNSS module 227, and the NFC module 228 may include a processor for processing data transmitted/received through a corresponding module. Although the cellular module 221, the Wi-Fi module 223, the BT module 225, the GNSS module 227, and the NFC module 228 are illustrated in FIG. 2 as separate blocks, at least two of the cellular module 221, the Wi-Fi module 223, the BT module 225, the GNSS module 227, and the NFC module 228 may be included in one integrated chip (IC) or IC package.

The RF module 229 may transmit/receive data, such as an RF signal, and may include a transceiver, a power amp module (PAM), a frequency filter, or a low noise amplifier (LNA). In addition, the RF module 229 may further include a component for transmitting/receiving a radio wave on a free space in wireless communication, e.g., a conductor or a conducting wire. The cellular module 221, the Wi-Fi module 223, the BT module 225, the GNSS module 227, and the NFC module 228 may share the RF module 229, or at least one of these modules may transmit/receive an RF signal via a separate RF module.

The SIM card 224 may be inserted into a slot formed in the electronic device. The SIM card 224 includes unique identification information, such as an integrated circuit card identifier (ICCID) or subscriber information, such as an international mobile subscriber identity (IMSI).

The memory 230 includes an internal memory 232 and an external memory 234. The internal memory 232 may include at least one of a volatile memory, such as a dynamic random access memory (DRAM), a static RAM (SRAM), or a synchronous dynamic RAM (SDRAM) or a non-volatile memory, such as a one- time programmable read only memory (OTPROM), a programmable ROM (PROM), an erasable and programmable ROM (EPROM), an electrically erasable and programmable ROM (EEPROM), a mask ROM, a flash ROM, a not and (NAND) flash memory, and a not or (NOR) flash memory. The internal memory 232 may be a solid state drive (SSD).

The external memory 234 may include a flash drive, a compact flash (CF), secure digital (SD), micro-SD, mini-SD, extreme digital (xD), and a memory stick, and may be operatively coupled to the electronic device via various interfaces. The external memory 234 may operationally or electrically connected the electronic device 201 through a various interface.

The sensor module 240 may measure a physical quantity or detect an operation state of the electronic device, and convert the measured or detected information into an electric signal. The sensor module 240 includes a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H, e.g., a red, green, blue (RGB) sensor, a biometric sensor 2401, a temperature/humidity sensor 240J, an illumination sensor 240K, an ultraviolet (UV) sensor 240M and ultrasonic sensor 240 N. Additionally or alternatively, the sensor module 240 may include other sensors, e.g., an E-node sensor, an electromyography (EMG) sensor, an electroencephalogram (EEG) sensor, an electrocardiogram (ECG) sensor, infrared(IR) sensor, iris scan sensor and/or a fingerprint sensor. The sensor module 240 may further include a control circuit for controlling at least one or more sensors included therein.

The input device 250 includes a touch panel 252, a (digital) pen sensor 254, a key 256, and an ultrasonic input unit 258. The touch panel 252 may recognize a touch input by using at least one of an electrostatic type configuration, a pressure-sensitive type configuration, and an ultrasonic type configuration. The touch panel 252 may further include a control circuit. When the touch panel is of the electrostatic type, both physical contact recognition and proximity recognition are possible. The touch panel 252 may further include a tactile layer, which provides the user with a tactile reaction.

The (digital) pen sensor 254 may include a recognition sheet which can be a part of the touch panel or can be separately implemented from the touch panel. The key 256 may include a physical button, an optical key, or a keypad. The ultrasonic input device 258 may detect ultrasonic waves generated by an input tool through a microphone 288, and may confirm data corresponding to the detected ultrasonic waves.

The display 260 includes a panel 262, a hologram device 264, and a projector 266. The panel 262 may be an LCD or an AM-OLED and may be implemented in a flexible, transparent, or wearable manner. Alternatively, the panel 262 may be constructed as one module with the touch panel 252. The hologram device 264 uses an interference of light and displays a stereoscopic image in the air. The projector 266 displays an image by projecting a light beam onto a screen, which may be located inside or outside the electronic device. The display 260 may further include a control circuit for controlling the panel 262, the hologram device 264, and/or the projector 266.

The interface 270 includes an HDMI 272, a USB 274, an optical interface 276, and a d-subminiature (D-sub) 278. The interface 270 may include a mobile high-definition link (MHL), SD/multi-media card (MMC), and/or infrared data association (IrDA).

The audio module 280 bilaterally converts a sound and an electric signal. The audio module 280 converts sound information, which is input or output through a speaker 282, a receiver 284, an earphone 286, and/or the microphone 288.

The camera module 291 captures an image and/or a video, and may include one or more image sensors, such as a front sensor or a rear sensor, a lens, an image signal processor (ISP), or a flash, such as an LED or a xenon lamp.

The power management module 295 manages power of the electronic device. The power management module 295 may include a power management integrated circuit (PMIC), a charger IC, and/or a battery gauge. The PMIC may be included in an IC or an SoC semiconductor and may use a wired charging and/or a wireless charging method. The charger IC may charge the battery 296 and may prevent an overvoltage or over-current flow. Different types of wireless charging may include magnetic resonance type, magnetic induction type, and electromagnetic type. An additional circuit for the wireless charging, such as a coil loop, a resonant circuit, and/or a rectifier may be added. The battery gauge may measure a residual quantity of the battery 296 and a voltage, current, and temperature during charging. The battery 296 stores or generates electricity and supplies power to the electronic device by using the stored or generated electricity. The battery 296 may include a rechargeable battery or a solar battery.

The indicator 297 indicates a specific state, such as a booting state, a message, or a charging state of the electronic device or a part thereof, such as the processor 210. The motor 298 converts an electric signal into a mechanical vibration. Alternatively, the electronic device includes a processing unit, such as a GPU, for supporting mobile TV, which processes media data according to a protocol, e.g., digital multimedia broadcasting (DMB), digital video broadcasting (DVB), and/or media flow™.

Each of the aforementioned elements of the electronic device may include one or more components, and the names thereof may vary depending on a type of the electronic device. Some of the elements illustrated in FIG. 2 may be omitted, and/or additional elements may be included therein. In addition, some of the elements of the electronic device may be combined and constructed as one entity, so as to equally perform functions of corresponding elements before combination. At least some parts of the electronic device, such as modules or functions thereof, or operations, may be implemented with an instruction stored in a non-transitory computer-readable storage media. The instruction may be executed by the processor 210, to perform a function corresponding to the instruction. The non-transitory computer-readable storage media may be the memory 230. At least some parts of the programming module may be executed by the processor 210. At least some parts of the programming module may include modules, programs, routines, and a set of instructions for performing one or more functions.

Although an electronic device that can be worn on a wrist is illustrated and described according to various embodiments, the present disclosure is not limited thereto. For example, the present disclosure is also applicable to various types of electronic devices that can be mounted to a cradle for wireless charging.

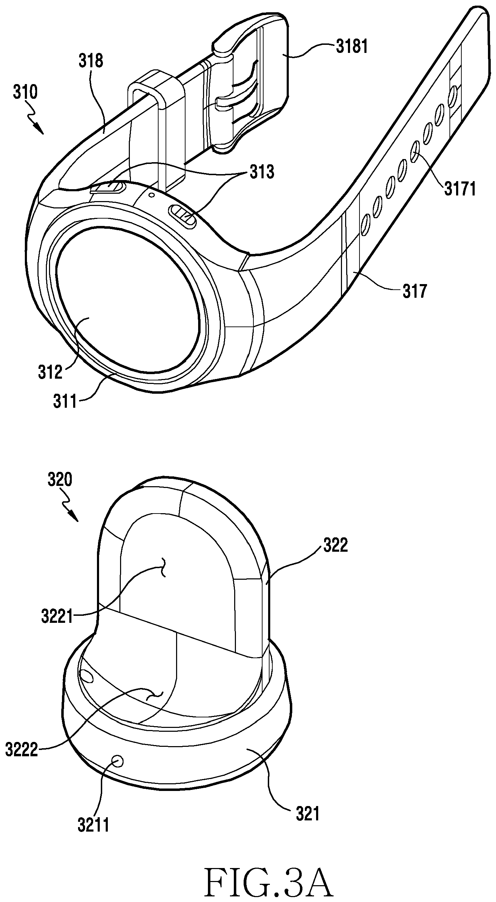

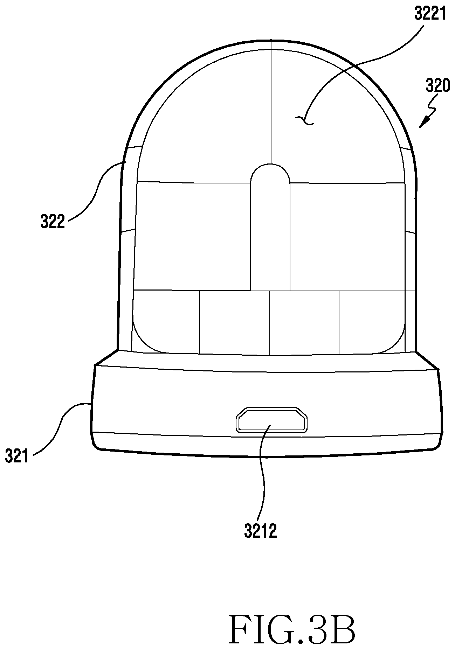

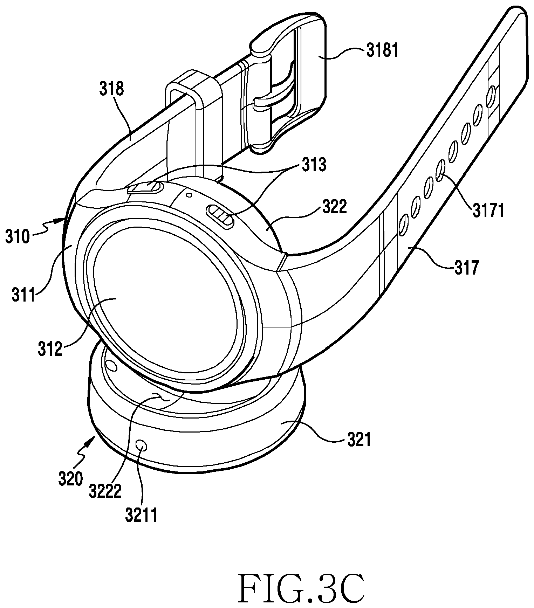

FIG. 3A is a perspective view illustrating a state before an electronic device 310 is mounted to a cradle 320 according to various embodiments of the present disclosure. FIG. 3B is a rear view of the cradle 320 according to various embodiments of the present disclosure. FIG. 3C is a perspective view illustrating a state where the electronic device 310 is mounted to the cradle 320 according to various embodiments of the present disclosure.

Referring to FIG. 3A to FIG. 3C, the electronic device 310 is a wrist-wearable electronic device that can be worn on a user's wrist. According to an embodiment, the electronic device 310 may include a body 311 and one or more coupling members 317 and 318 (e.g., a strap, a connection portion) placed to the body 311. According to an embodiment, the coupling member may include the first coupling member 317 fixed to one end of the body 311 and the second coupling member 318 fixed to the other end of the body 311. According to an embodiment, the first coupling member 317 may have a plurality of coupling holes 3171 disposed with regular intervals to adjust positions, and the second coupling member 318 may include a buckle 3181 to be fastened to the coupling holes 3171. According to an embodiment, the electronic device 310 may be worn on the user's wrist in such a manner that the coupling members 317 and 318 are wound around the wrist while the body 311 is placed on the wrist and the buckle 3181 is fastened to the coupling hole 3171. However, without being limited thereto, the coupling member may be provided in one piece and applied as an elastic band type.

According to various embodiments, although a wrist wearable device is illustrated and described, the present disclosure is not limited thereto. For example, wearable devices in a type of glasses, necklaces, or clips and cradles for charging the devices may also be applied.

According to various embodiments, the electronic device 310 may include a display 312 in the body 311. According to an embodiment, the display 312 may include a touch screen. According to an embodiment, at least one key button 313 may be disposed at a proper position of the body 311.

According to various embodiments, the cradle 320 may have a size substantially enough to apply the body 311 of the electronic device 310. According to an embodiment, the cradle 320 may include a base 321 and a mounting portion 322 extended upwardly from the base 321. According to an embodiment, the mounting portion 322 may be extended substantially vertically or with a specific angle in the base 321. According to an embodiment, the mounting portion 322 is extended from the base, and may be disposed parallel to the base. According to an embodiment, the base 321 may have a device mounting recess 3222 capable of accommodating at least a portion of the electronic device 310. According to an embodiment, the device mounting recess 3222 may have a shape corresponding to a shape of the electronic device 310. According to an embodiment, when a corresponding exterior of the electronic device has a circular or polygonal shape, the device mounting recess 3222 may have a corresponding circular or polygonal shape. According to an embodiment, the device mounting recess 3222 may have a shape capable of accommodating electronic components (e.g., key buttons, protruding members, etc.) exposed to or protruding from the exterior of the electronic device. According to various embodiments, the mounting portion 322 may have a wireless charging region 3221 disposed to one side.

According to various embodiments, the base 321 may have a charging connector port 3212 for accommodating an external power source to provide power to a power transmission coil member disposed inside the cradle 320. According to an embodiment, the charging connector port 3212 may accommodate the connector of an external power source (e.g., a Travel Adaptor (TA)). According to an embodiment, the base 321 may have at least one indicator 3211 disposed thereon. According to an embodiment, the indicator 3211 may be disposed at a position where it is easy for the user to visually identify a charging state. According to an embodiment, the indicator 3211 may include an LED indicator, and may emit light in various colors depending on the charging state.

According to various embodiments, in the electronic device 310, a charging position may be aligned in such a manner that a surface of the body 311 facing the display 312 is in surface contact with the wireless charging region 3221 of the mounting portion 322 of the cradle 320. At the same time, a portion of the electronic device 310 may be mounted to the device mounting recess 3222 of the base 321 of the cradle 320. According to an embodiment, the body 311 of the electronic device 310 and the mounting portion 322 of the cradle 320 may be mounted in such a manner that they are attached by a magnetic force of the magnet. According to an embodiment, the electronic device 310 may be aligned in the cradle 320 at an appropriate charging position for wireless charging by repulsive and attractive forces generated based on polarity of a plurality of magnets disposed at a proper position of the electronic device 310 and the cradle 320. According to an embodiment, in a case where the electronic device 310 is mounted to the cradle 320 for wireless charging, when the body 311 and the mounting portion 322 are correctly aligned, wireless charging may be correctly guided irrespective of a rotation position thereof with respect to a mounting direction. For example, unlike in FIG. 3C, charging may be correctly guided in the electronic device 310 even in a state where the key button 313 is mounted to the device mounting recess 3222 of the cradle 320, that is, in a state where the electronic device 310 rotates 180 degrees with respect to the mounting direction.

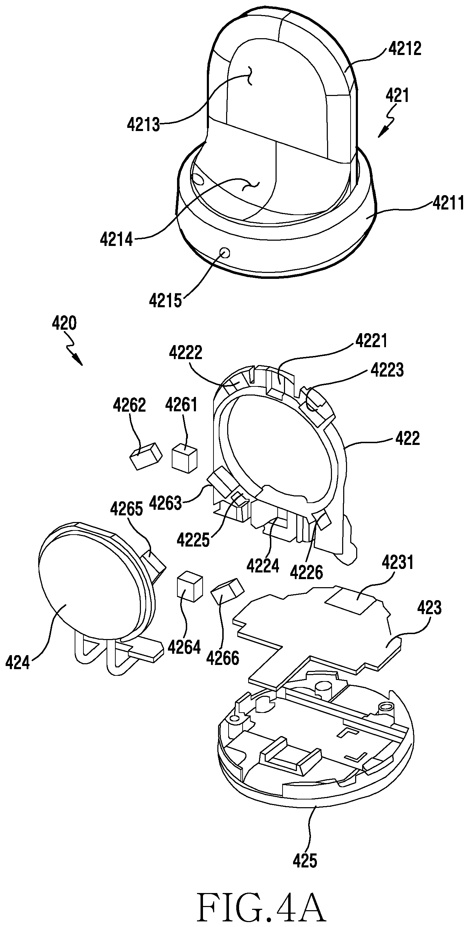

FIG. 4A is an exploded perspective view of a cradle 420 according to various embodiments of the present disclosure.

The cradle 420 of FIG. 4A may be an embodiment of a cradle similar to or different from the cradle 320 of FIG. 3A.

Referring to FIG. 4A, the wireless charging cradle 420 may include an outer housing 421, a bracket 422 disposed inside a space provided in the outer housing 421, including a plurality of magnets 4261, 4262, 4263, 4264, and 4265, and including a power transmission coil member 424 in a front side thereof, a substrate 423 disposed to a lower portion of the bracket 422, and a lower housing 425 coupled to the outer housing 421.

According to various embodiments, the outer housing 421 may contribute to an overall exterior of the cradle 420. According to an embodiment, the outer housing 421 may include a base 4211 at a lower portion and a mounting portion 4212 extended upwardly from the base 4211. According to an embodiment, the mounting portion 4212 may be extended substantially vertically or with a specific angle in the base 4211. According to an embodiment, the mounting portion 4212 is extended from the base 4211, and may be disposed parallel to the base 4211. According to an embodiment, the base 4211 may have a device mounting recess 4214 capable of accommodating at least a portion of the electronic device. According to an embodiment, the device mounting recess 4214 may have a shape corresponding to a shape of the electronic device. According to an embodiment, the mounting portion 4212 may have a wireless charging region 4213 disposed to a front side thereof. According to an embodiment, the outer housing 421 may accommodate the aforementioned electronic components (e.g., a bracket, a substrate, a power transmission coil member, etc.) in an inner region of the base 4211 and the mount portion 4212.

According to various embodiments, the bracket 422 may have a shape for vertically penetrating an inner portion of the mounting portion 4212 disposed vertically. According to an embodiment, the power transmission coil member 424 may be disposed to a front side of the bracket 422, that is, in a direction of the wireless charging region 4213 of the mounting portion 4212, and may be electrically connected to a substrate 423 disposed to a lower portion of the bracket 422. According to an embodiment, the bracket 422 may have a circular shape, and the plurality of magnets 4261, 4262, 4263, 4264, 4265, and 4266 may be disposed with regular intervals along a boundary of the bracket 422. However, without being limited thereto, the bracket 422 may have various shapes corresponding to a contour of the cradle in addition to the circular shape. According to an embodiment, the plurality of magnets 4261, 4262, 4263, 4264, 4265, and 4266 may include at least one magnet having a different polarity. According to an embodiment, the plurality of magnets 4261, 4262, 4263, 4264, 4265, and 4266 may be disposed such that a corresponding polarity is exhibited in a direction of the wireless charging region 4213 of the mounting portion 4212. According to an embodiment, although not shown, a heat radiation member for diffusing heat generated from the coil member to a surrounding area may be further disposed around the power transmission coil member 424. According to an embodiment, although not shown, a shielding member may be further disposed around the power transmission coil member 424 to shield noise occurring from the coil member.

According to various embodiments, the bracket 422 may have a plurality of mounting recesses 4221, 4222, 4223, 4224, 4225, and 4226 for accommodating the plurality of magnets 4261, 4262, 4263, 4264, 4265, and 4266. According to an embodiment, among the magnets 4261, 4262, 4263, 4264, 4265 and 4266, three magnets may be disposed to an upper portion of the bracket 422, and three magnets may be disposed to a lower portion of the bracket 422. According to an embodiment, the first magnet 4261 may be disposed to an upper center portion of the bracket 422, and the second magnet 4262 and the third magnet 4263 may be disposed respectively to the left and right of the first magnet 4261. According to an embodiment, the fourth magnet 4264 may be disposed to a lower center portion of the bracket 422, and the fifth magnet 4265 and the sixth magnet 4266 may be disposed respectively to the left and right of the fourth magnet 4263. According to an embodiment, the first magnet 4261 and the fourth magnet 4264 may have the same polarity, and the second magnet 4262, the third magnet 4263, the fifth magnet 4265, and the sixth magnet 4266 may have a polarity different from a polarity of the first and fourth magnets 4261 and 4264. However, without being limited thereto, the polarity and disposition of the magnets disposed to the cradle 420 may vary depending on the disposition and polarity of the magnets disposed inside the electronic device. According to an embodiment, the plurality of magnets may be disposed at various positions inside the cradle other than the bracket 422.

According to various embodiments, the substrate 423 may include a charging connector port 4231 capable of providing external power. According to an embodiment, the charging connector port 4231 may be disposed to be exposed to the outside from at least one portion (e.g., the base) of the cradle 420. According to an embodiment, although not shown, the substrate 423 may be disposed to be exposed to the outside from at least one portion (e.g., the base) of the cradle 420, and thus an indicator (e.g., an LED indicator) is mounted to visually provide a charging state to a user. According to an embodiment, the substrate 423 may initiate a power transmission operation for wireless charging by providing external power applied by the charging connector port 4231 to the power transmission coil member 424.

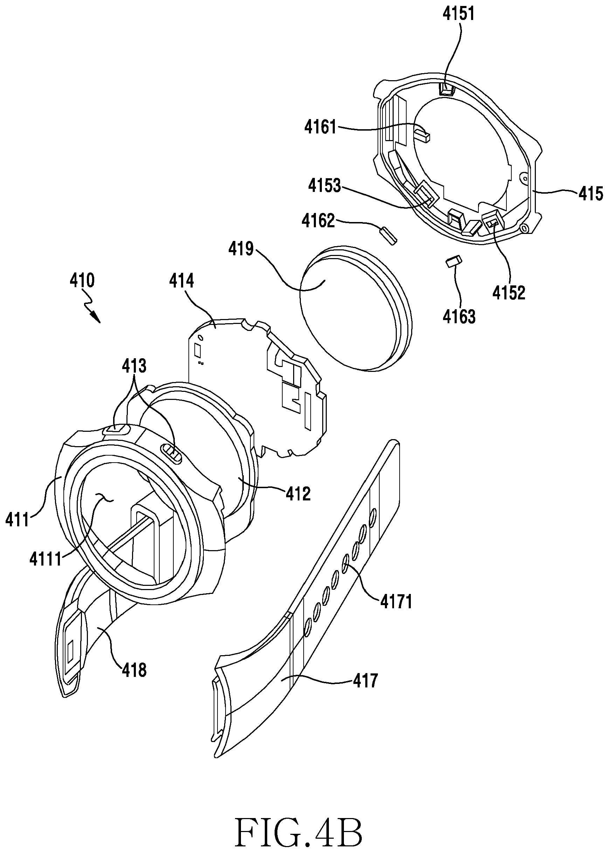

FIG. 4B is an exploded perspective view of an electronic device 410 according to various embodiments of the present disclosure.

The electronic device 410 of FIG. 4B may be an embodiment of an electronic device similar to or different from the electronic device 310 of FIG. 3A.

Referring to FIG. 4B, the electronic device 410 is a wrist-wearable electronic device that can be worn on a user's wrist. According to an embodiment, the electronic device 410 may include a body and one or more coupling members 417 and 418 (e.g., a strap, a connection portion) placed to the body. According to an embodiment, the coupling member may include the first coupling member 417 fixed to one end of the body and the second coupling member 418 fixed to the other end of the body. According to an embodiment, the first coupling member 417 may have a plurality of coupling holes 4171 disposed with regular intervals to adjust positions, and the second coupling member 418 may include a buckle (not shown) to be fastened to the coupling holes 4171.

According to various embodiments, the body includes an opening 4111. The body may further include a bezel 411 disposed to a front side of the electronic device 410, a display 412 of which a display region is exposed through the opening 4111 of the bezel 411, a substrate 414 disposed to a rear side of the display 412, a power reception coil member 419 disposed to be electrically connected to the substrate 414, a rear housing 415 coupled to the bezel 411 to provide a space for accommodating the aforementioned electronic components (e.g., the display, the substrate, etc.), and a plurality of magnets 4161, 4162, and 4163 disposed respectively to a plurality of mounting recesses 4151, 4152, and 4153 disposed at proper positions inside the rear housing 415. According to an embodiment, the plurality of magnets 4161, 4162, and 4163 may be disposed at a position corresponding to at least one of the plurality of magnets of the cradle 420 when the electronic device 410 is normally mounted for wireless charging to the cradle with respect to a mounting direction. According to an embodiment, when the electronic device 410 is normally mounted to the cradle 420 with respect to the mounting direction, a magnet having a polarity different from a polarity of a magnet disposed to a corresponding position of the cradle 420 so as to be attached to the mounting portion 4212 of the cradle 420 may be applied to the magnets 4161, 4162, and 4163 disposed to the electronic device 410. According to an embodiment, the plurality of magnets 4161, 4162, and 4163 may be disposed such that a corresponding polarity is exhibited in a direction of the mounting portion 4212 of the cradle in the electronic device.

According to various embodiments, the power reception coil member 419 may be electrically connected to the substrate 414. According to an embodiment, when the electronic device 410 is mounted to the cradle 420 for wireless charging, the power reception coil member 419 may be disposed at a position corresponding to (or overlapping with) the power transmission coil member of the cradle 420. According to an embodiment, although not shown, a heat radiation member for diffusing heat generated from the coil member to a surrounding area may be further disposed around the power reception coil member 419. According to an embodiment, although not shown, a shielding member may be further disposed around the power reception coil member 419 to shield noise occurring from the coil member.

Hereinafter, the arrangement relationship of the magnets included in the cradle and the electronic device will be described in detail.

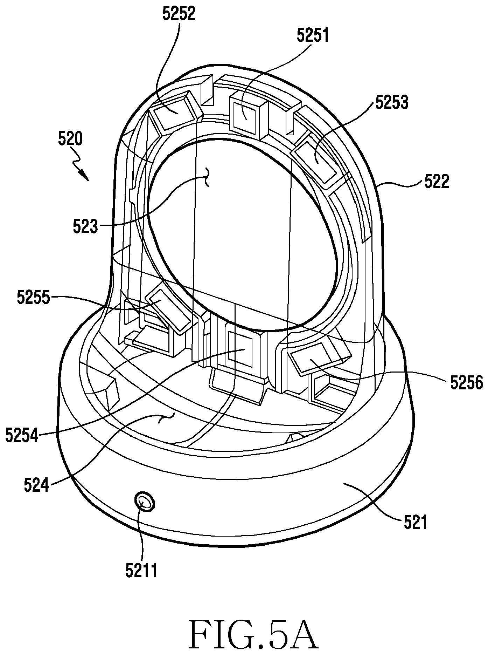

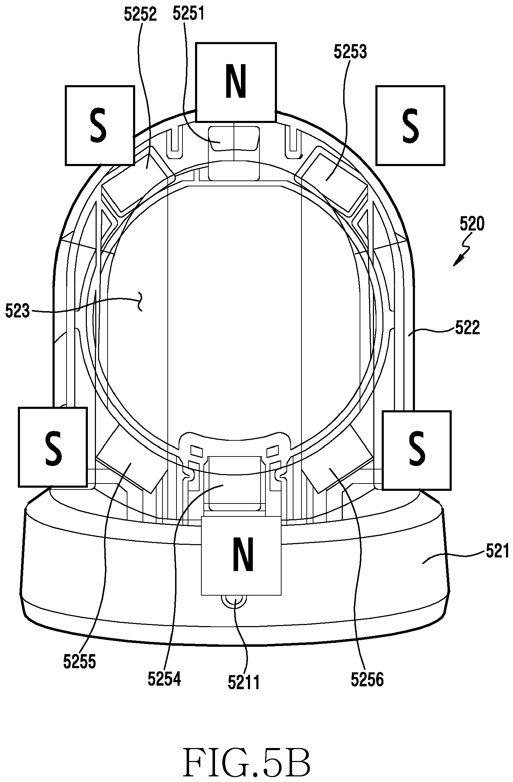

FIG. 5A and FIG. 5B illustrate an arrangement relation of magnets 5251, 5252, 5253, 5254, 5255 and 5256 installed in a cradle 520 according to various embodiments of the present disclosure.

The cradle 520 of FIG. 5A and FIG. 5B may be an embodiment of a cradle similar to or different from the cradle 320 of FIG. 3A and the cradle 420 of FIG. 4A.

Referring to FIG. 5A and FIG. 5B, according to various embodiments, the cradle 520 may include a base 521 and a mounting portion 522 extended from the base 521 to accommodate a body of the electronic device. According to an embodiment, an indicator 5211 may be disposed to base 521. According to an embodiment, a mounting portion 522 may have a wireless charging region 523 and a device mounting recess 524 disposed to a lower portion of the wireless charging region 523 to accommodate at least a portion of the electronic device.

According to various embodiments, the plurality of magnets 5251, 5252, 5253, 5254, 5255, and 5256 may be disposed along a periphery of the wireless charging region 523 (e.g., a region where a power transmission coil member is disposed). According to an embodiment, the plurality of magnets 5251, 5252, 5253, 5254, 5255, and 5256 may be disposed along a boundary of the wireless charging region 523. However, without being limited thereto, the plurality of magnets 5251, 5252, 5253, 5254, 5255, and 5256 may be disposed inside the wireless charging region.

According to various embodiments, among the plurality of magnets 5251, 5252, 5253, 5254, 5255, and 5256 disposed to the cradle 520, three magnets may be disposed to an upper portion of the mounting portion, and three magnets may be disposed to a lower portion thereof. According to an embodiment, the first magnet 5251 may be disposed to an upper center portion of the mounting portion 522, and the second magnet 5252 and the third magnet 5253 may be disposed respectively to the left and right of the first magnet 5251. According to an embodiment, the fourth magnet 5254 may be disposed to a lower center portion of the mounting portion 522, and the fifth magnet 5255 and the sixth magnet 5256 may be disposed respectively to the left and right of the fourth magnet 5253. According to an embodiment, the first magnet 5251 and the fourth magnet 5254 may have the same polarity, and the second magnet 5252, the third magnet 5253, the fifth magnet 5255, and the sixth magnet 5256 may have a polarity different from a polarity of the first and fourth magnets 5251 and 5254. However, without being limited thereto, the polarity and disposition of the magnets disposed to the cradle 520 may vary depending on the arrangement and polarity of the magnets disposed inside the electronic device. According to an embodiment, the plurality of magnets 5251, 5252, 5253, 5254, 5255, and 5256 may be disposed such that a corresponding polarity is exhibited in a direction of the wireless charging region 523 of the mounting portion 522.

According to various embodiments, a magnet having a polarity of S may be applied to the second, third, fifth, and sixth magnets 5252, 5253, 5255, and 5256 when a magnet having a polarity of N is applied to the first magnet 5251 and the fourth magnet 5254. However, without being limited thereto, the magnet having the polarity of N may be applied to the second, third, fifth, and sixth magnets 5252, 5253, 5255, and 5256 when the magnet having the polarity of S is applied to the first magnet 5251 and the fourth magnet 5254.

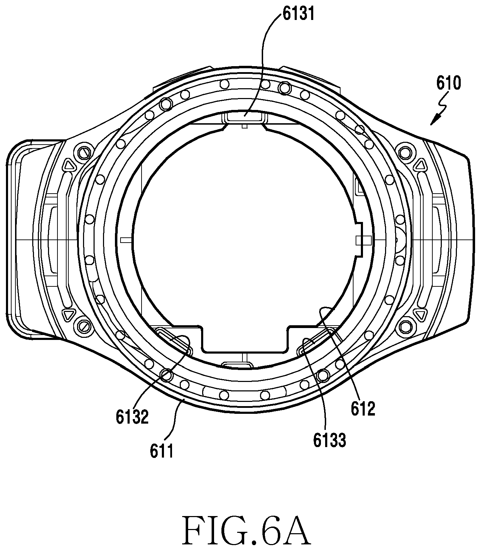

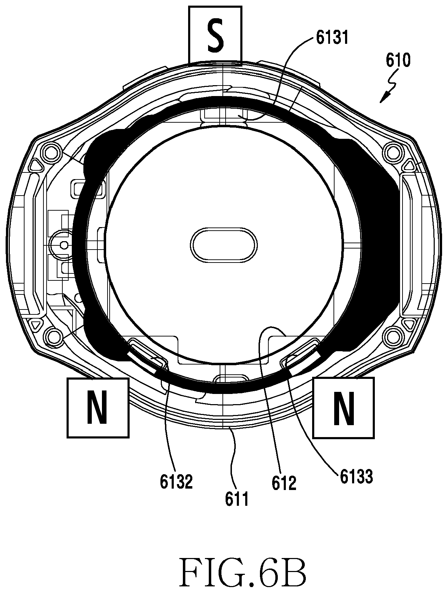

FIG. 6A and FIG. 6B illustrate an arrangement relation of magnets 6131, 6132 and 6133 installed in an electronic device 610 according to various embodiments of the present disclosure.

The electronic device 610 of FIG. 6A and FIG. 6B may be an embodiment of an electronic device similar to or different from the electronic device 310 of FIG. 3A and the electronic device 410 of FIG. 4B.

Referring to FIG. 5A to FIG. 6B, the electronic device 610 may have a plurality of magnets 6131, 6132, and 6133 disposed to a rear housing 612 of a body. However, without being limited thereto, the magnets may be disposed at various positions inside the electronic device 610.

According to various embodiments, the plurality of magnets 6131, 6132, 6133 may be disposed along a periphery of a wireless charging region (e.g., a region corresponding to a power reception coil member). According to an embodiment, the plurality of magnets 6131, 6132 and 6133 may be disposed along a boundary of the wireless charging region. However, without being limited thereto, the plurality of magnet 6131, 6132, and 6133 may be disposed inside the wireless charging region.

According to various embodiments, the plurality of magnets 6131, 6132, and 6133 may be disposed at a position corresponding to at least one of the plurality of magnets of the cradle 520 when the electronic device 610 is normally mounted for wireless charging to the cradle with respect to a mounting direction. According to an embodiment, a magnet having a polarity different from a magnet disposed at a corresponding position so as to be attached to the mounting portion 522 of the cradle 520 may be applied to the plurality of magnet 6131, 6132, and 6132 disposed to the electronic device 610. According to an embodiment, the plurality of magnets 6131, 6132, and 6133 may be disposed such that a corresponding polarity is exhibited in a direction of the mounting portion of the cradle in the electronic device.

According to various embodiments, when the electronic device 610 is normally mounted to the mounting portion 622 of the cradle 520 with respect to the mounting direction for wireless charging, the plurality of magnets 6131, 6132, and 6133 disposed to the electronic device 610 may include the first magnet 6131 disposed at a position corresponding to the first magnet 5251 of the cradle 520 and the second magnet 6132 and third magnet 6133 respectively disposed at positions corresponding to the fifth magnet 5255 and sixth magnet 5256 of the cradle 520.

According to various embodiments, when a magnet having a polarity of S is applied to the first magnet 6131, a magnet having a polarity of N may be applied to the second and third magnets 6132 and 6133. However, without being limited thereto, a magnet having a polarity of S may be applied to the second and third magnets 6132 and 6133 when the magnet having the polarity of N is applied to the first magnet 6131.

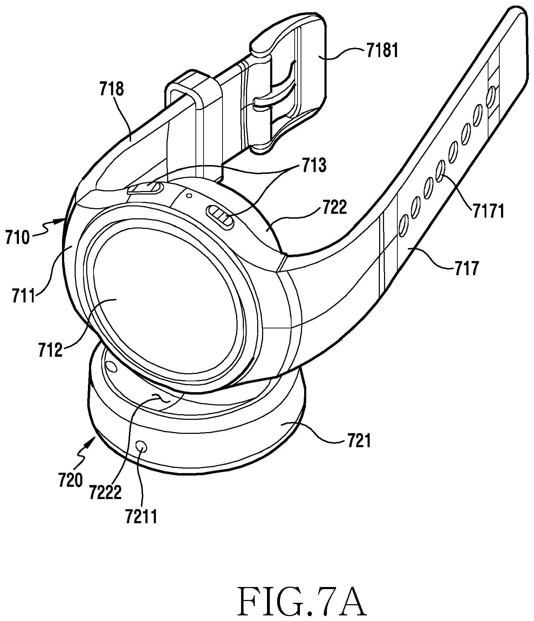

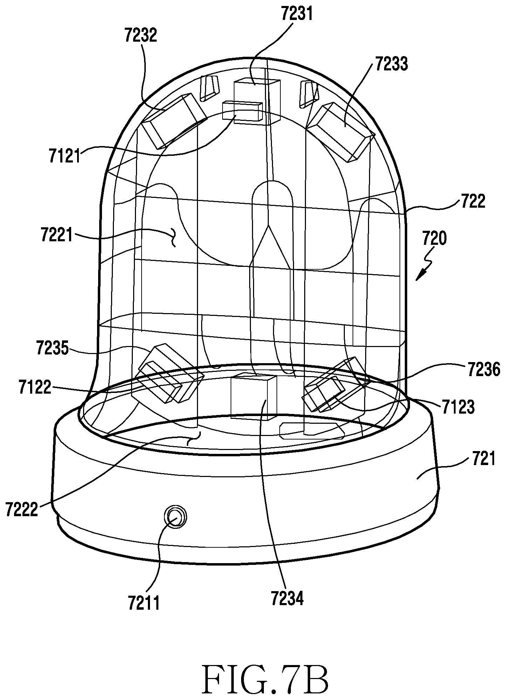

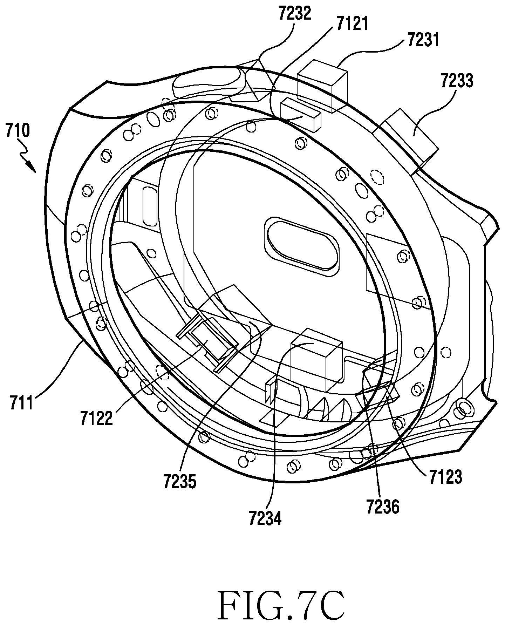

FIG. 7A to FIG. 7C illustrate a corresponding relation of magnets when an electronic device 710 is normally mounted to a cradle 720 with respect to a mounting direction according to various embodiments of the present disclosure.

The electronic device 710 and cradle 720 of FIG. 7A to FIG. 7C may be an embodiment of an electronic device and cradle similar to or different from the electronic devices 310, 410, and 610 and cradles 320, 420, and 520 of FIG. 3A to FIG. 6B.

Referring to FIG. 7A to FIG. 7C, the electronic device 710 may be normally mounted to the cradle 720 with respect to the mounting direction for wireless charging. According to an embodiment, it may be mounted in such a manner that a rear side of a body 711 of the electronic device 710 is attached by a magnetic force to a mounting portion 722 extended upwardly from a base 721. According to an embodiment, a portion of the body of the electronic device 710 may be mounted to a device mounting recess 7222.

According to various embodiments, the cradle 720 may include a plurality of magnets 7231, 7232, 7233, 7234, 7235, and 7236. According to an embodiment, among the plurality of magnets 7231, 7232, 7233, 7234, 7235, and 7236, three magnets may be disposed to an upper portion of the mounting portion, and three magnets may be disposed to a lower portion thereof. According to an embodiment, the first magnet 7231 may be disposed to an upper center portion of the mounting portion 722, and the second magnet 7232 and the third magnet 7233 may be disposed respectively to the left and right of the first magnet 7231. According to an embodiment, the fourth magnet 7234 may be disposed to a lower center portion of the mounting portion 722, and the fifth magnet 7235 and the sixth magnet 7236 may be disposed respectively to the left and right of the fourth magnet 7233. According to an embodiment, the first magnet 7231 and the fourth magnet 7234 may have the same polarity, and the second magnet 7232, the third magnet 7233, the fifth magnet 7235, and the sixth magnet 7236 may have a polarity different from a polarity of the first and fourth magnets 7231 and 7234.

According to various embodiments, the electronic device 710 may include a plurality of magnets 7121, 7122, and 7123. According to an embodiment, when the electronic device is mounted to the mounting portion at a normal position with respect to the mounting direction, the plurality of magnets 7121, 7122, and 7123 may include the first magnet 7121 disposed at a position corresponding to the first magnet 7231 of the cradle 720 and the second magnet 7122 and third magnet 7123 respectively disposed at positions corresponding to the fifth magnet 7255 and sixth magnet 7256 of the cradle 720.

According to various embodiments, when the electronic device 710 is mounted to the mounting portion 722 of the cradle 720 at a normal position with respect to the mounting direction, the first magnet 7121 of the electronic device 710 may correspond to the first magnet 7231 of the cradle 720. According to an embodiment, the first magnet 7121 of the electronic device 710 and the first magnet 7231 of the cradle 720 may be configured to have mutual attraction by disposing a magnet having a different polarity. According to an embodiment, the second magnet 7122 and third magnet 7123 of the electronic device 710 may be configured to have mutual attraction by disposing a magnet having a polarity different from a polarity of the fifth magnet 7235 and sixth magnet 7235 of the cradle 720. Therefore, positional alignment may be possible for wireless charging in the electronic device 710 since the three magnets 7121, 7122, and 7123 are attached by an attractive force respectively in accordance with the first, fifth, and sixth magnets 7231, 7235, and 7236 of the cradle. According to an embodiment, the plurality of magnets 7231, 7232, 7233, 7234, 7235, and 7236 disposed to the cradle 720 may be disposed such that a corresponding polarity is exhibited in a direction of a wireless charging region 7221 of the mounting portion 722. According to an embodiment, the plurality of magnets 7121, 7122, and 7123 of the electronic device may be disposed such that a corresponding polarity is exhibited in a direction of the mounting portion 722 of the cradle 720 in the electronic device.

An indicator is indicated by a reference numeral 7211. A key button is indicated by a reference numeral 713. A body of the electronic device is indicated by a reference numeral 711.

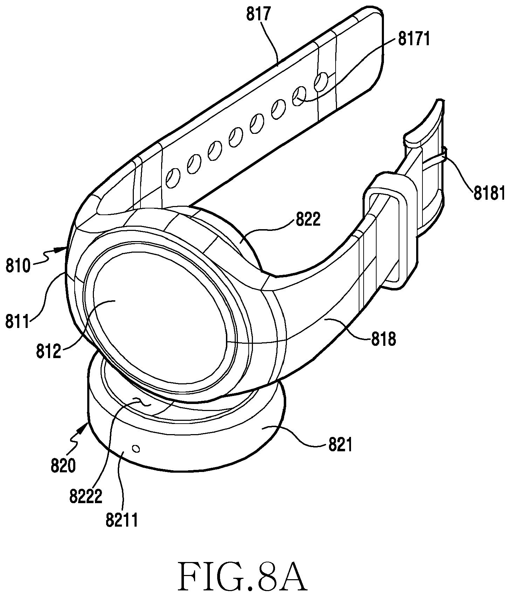

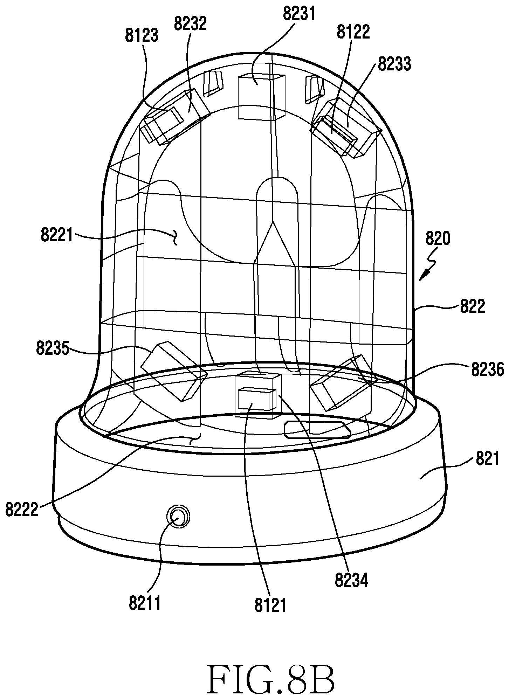

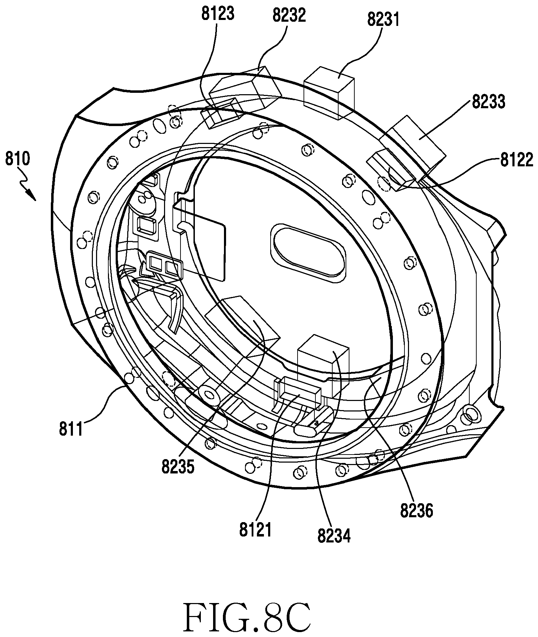

FIG. 8A to FIG. 8C illustrate a corresponding relation of magnets when an electronic device 810 is mounted to a cradle 820 in a state of being rotated by 180 degrees with respect to a mounting direction according to various embodiments of the present disclosure.

The electronic device 810 and cradle 820 of FIG. 8A to FIG. 8C may be an embodiment of an electronic device and cradle similar to or different from the electronic devices 310, 410, 610, and 710 and cradles 320, 420, 520, and 720 of FIG. 3A to FIG. 7C.

Referring to FIG. 8A to FIG. 8C, the electronic device 810 may be mounted to the cradle 820 in a state of being rotated by 180 degrees with respect to the mounting direction for wireless charging. According to an embodiment, it may be mounted in such a manner that a rear side of a body 811 of the electronic device 810 is attached by a magnetic force to a mounting portion 822 extended upwardly from a base 821. According to an embodiment, a portion of the body of the electronic device 810 may be mounted to a device mounting recess 8222.

According to various embodiments, the cradle 820 may include a plurality of magnets 8231, 8232, 8233, 8234, 8235, and 8236. According to an embodiment, among the plurality of magnets 8231, 8232, 8233, 8234, 8235, and 8236, three magnets may be disposed to an upper portion of the mounting portion, and three magnets may be disposed to a lower portion thereof. According to an embodiment, the first magnet 8231 may be disposed to an upper center portion of the mounting portion 822, and the second magnet 8232 and the third magnet 8233 may be disposed respectively to the left and right of the first magnet 8231. According to an embodiment, the fourth magnet 8234 may be disposed to a lower center portion of the mounting portion 822, and the fifth magnet 8235 and the sixth magnet 8236 may be disposed respectively to the left and right of the fourth magnet 8233. According to an embodiment, the first magnet 8231 and the fourth magnet 8234 may have the same polarity, and the second magnet 8232, the third magnet 8233, the fifth magnet 8235, and the sixth magnet 8236 may have a polarity different from a polarity of the first and fourth magnets 8231 and 8234.

According to various embodiments, the electronic device 810 may also include a plurality of magnets 8121, 8122, and 8123. According to an embodiment, when the electronic device 810 is normally mounted to the cradle 820 with respect to the mounting direction, the plurality of magnets 8121, 8122, and 8123 may include the first magnet 8121 disposed at a position corresponding to the first magnet 8251 of the cradle 820 and the second magnet 8122 and third magnet 8123 respectively disposed at positions corresponding to the fifth magnet 8255 and sixth magnet 8256 of the cradle 820.

According to various embodiments, when the electronic device 810 is abnormally mounted to the cradle 820 with respect to the mounting direction for wireless charging (when the electronic device is mounted in a state of being rotated by 180 degrees with respect to the mounting direction), among the plurality of magnets disposed to the cradle 820, the fourth magnet 8234 may be disposed at a position corresponding to the first magnet 8121 of the electronic device 810, and the second magnet 8232 and third magnet 8233 of the cradle 820 may also be disposed at a position of the third magnet 8123 and second magnet 8122 of the electronic device. According an embodiment, the fourth magnet 8234 of the cradle 820 may be configured to have mutual attraction by disposing a magnet having a polarity different from a polarity of the first magnet 8121 of the electronic device 810. According to an embodiment, the second magnet 8232 and third magnet 8233 of the cradle 820 may also be disposed to have mutual attraction by disposing respective magnets having a polarity different from a polarity of the third magnet 8123 and second magnet 8122 of the electronic device 810.

According to various embodiments, when the electronic device 810 is mounted to the mounting portion 822 of the cradle 820 in a state of being rotated by 180 degrees with respect to the mounting direction, the first magnet 8121 of the electronic device 810 may correspond to the fourth magnet 8234 of the cradle 820. According to an embodiment, the first magnet 8121 of the electronic device 810 and the fourth magnet 8234 of the cradle 820 may be configured to have mutual attraction by disposing a magnet having a different polarity. According to an embodiment, the third magnet 8123 and second magnet 8122 of the electronic device 810 may be configured to have mutual attraction by disposing a magnet having a polarity different from a polarity of the second magnet 8232 and third magnet 8233 of the cradle 820. Therefore, even if the electronic device 810 is mounted to the cradle 820 in a state of being rotated by 180 degrees with respect to the mounting direction, positional alignment may be possible for wireless charging in the electronic device 810 since the three magnets 8121, 8122, and 8123 are attached by an attractive force respectively in accordance with the fourth, third, and second magnets 8234, 8233, and 8232 of the cradle 820. According to an embodiment, the plurality of magnets 8231, 8232, 8233, 8234, 8235, and 8236 disposed to the cradle 820 may be disposed such that a corresponding polarity is exhibited in a direction of a wireless charging region 8221 of the mounting portion 822. According to an embodiment, the plurality of magnets 8121, 8122, and 8123 of the electronic device may be disposed such that a corresponding polarity is exhibited in a direction of the mounting portion 822 of the cradle 820 in the electronic device.

An indicator is indicated by a reference numeral 8211. A key button is indicated by a reference numeral 813. A body of the electronic device is indicated by a reference numeral 811.

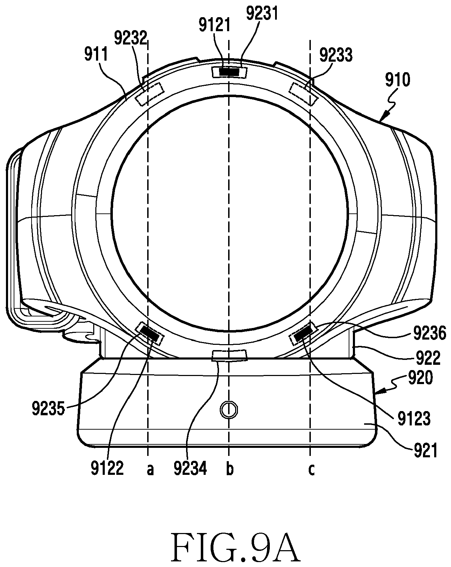

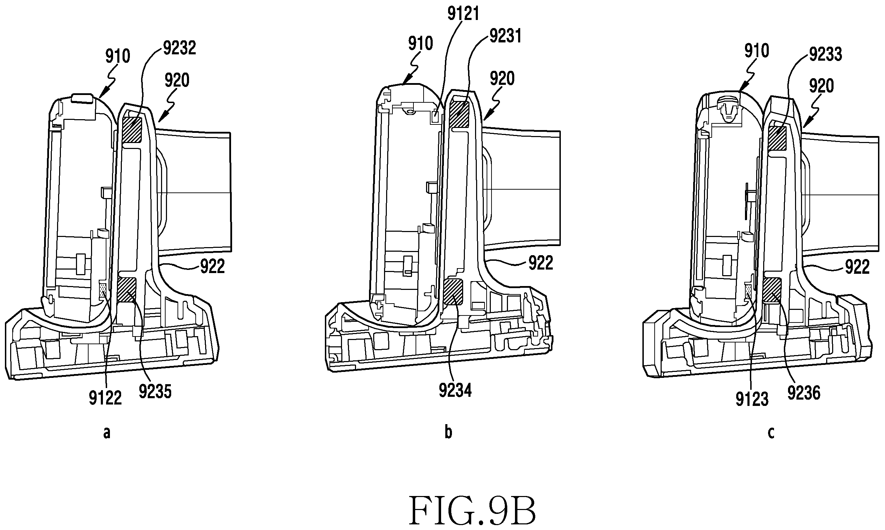

FIG. 9A and FIG. 9B are perspective views illustrating essential parts of a cradle 920, viewed from various directions, in a state where an electronic device 910 is normally mounted to a cradle 920 with respect to a mounting direction according to various embodiments of the present disclosure.

The electronic device 910 and cradle 920 of FIG. 9A and FIG. 9B may be an embodiment of an electronic device and cradle similar to or different from the electronic devices 310, 410, 610, 710, and 810 and cradles 320, 420, 520, 720, and 820 of FIG. 3A to FIG. 8C.

Referring to FIG. 9A and FIG. 9B, the electronic device 910 may be normally mounted to the cradle 920 with respect to the mounting direction for wireless charging. According to an embodiment, it may be mounted in such a manner that a rear side of a body 911 of the electronic device 910 is attached by a magnetic force to a mounting portion 922 extended upwardly from a base 921.

According to various embodiments, the cradle 920 may include a plurality of magnets 9231, 9232, 9233, 9234, 9235, and 9236. According to an embodiment, among the plurality of magnets 9231, 9232, 9233, 9234, 9235, and 9236, three magnets may be disposed to an upper portion of the mounting portion, and three magnets may be disposed to a lower portion thereof. According to an embodiment, the first magnet 9231 may be disposed to an upper center portion of the mounting portion 922, and the second magnet 9232 and the third magnet 9233 may be disposed respectively to the left and right of the first magnet 9231. According to an embodiment, the fourth magnet 9234 may be disposed to a lower center portion of the mounting portion 922, and the fifth magnet 9235 and the sixth magnet 9236 may be disposed respectively to the left and right of the fourth magnet 9233. According to an embodiment, the first magnet 9231 and the fourth magnet 9234 may have the same polarity, and the second magnet 9232, the third magnet 9233, the fifth magnet 9235, and the sixth magnet 9236 may have a polarity different from a polarity of the first and fourth magnets 9231 and 9234.

According to various embodiments, the electronic device 910 may also include a plurality of magnets 9121, 9122, and 9123. According to an embodiment, the plurality of magnets 9121, 9122, and 9123 may include the first magnet 9121 disposed at a position corresponding to the first magnet 9251 of the cradle 920 and the second magnet 9122 and third magnet 9123 respectively disposed at positions corresponding to the fifth magnet 9255 and sixth magnet 9256 of the cradle 920.

According to various embodiments, when the electronic device 910 is mounted to the mounting portion 922 of the cradle 920 at a normal position with respect to the mounting direction, the first magnet 9121 of the electronic device 910 may correspond to the first magnet 9231 of the cradle 920. According to an embodiment, the first magnet 9121 of the electronic device 910 and the first magnet 9231 of the cradle 920 may be configured to have mutual attraction by disposing a magnet having a different polarity. According to an embodiment, the second magnet 9122 and third magnet 9123 of the electronic device 910 may be configured to have mutual attraction by disposing a magnet having a polarity different from a polarity of the fifth magnet 9235 and sixth magnet 9235 of the cradle 920. Therefore, positional alignment may be possible for wireless charging in the electronic device 910 since the three magnets 9121, 9122, and 9123 are attached by an attractive force respectively in accordance with the first, fifth, and sixth magnets 9231, 9235, and 9236 of the cradle. According to an embodiment, the plurality of magnets 9231, 9232, 9233, 9234, 9235, and 9236 disposed to the cradle 920 may be disposed such that a corresponding polarity is exhibited in a direction of a wireless charging region 9221 of the mounting portion 922. According to an embodiment, the plurality of magnets 9121, 9122, and 9123 of the electronic device 910 may be disposed such that a corresponding polarity is exhibited in a direction of the mounting portion 922 of the cradle 920 in the electronic device 910.

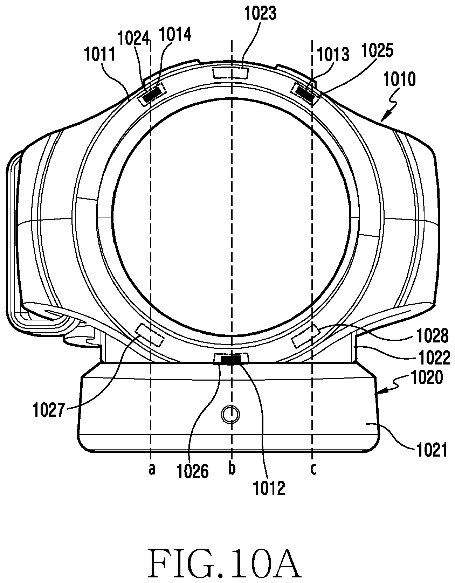

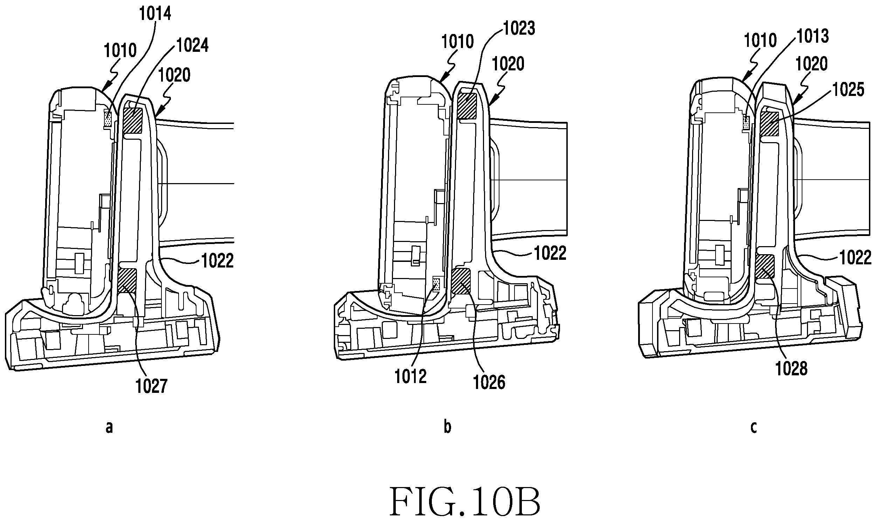

FIG. 10A and FIG. 10B are perspective views illustrating essential parts of a cradle 1020, viewed from various directions, when an electronic device 1010 is mounted to a cradle 1020 in a state of being rotated by 180 degrees with respect to a mounting direction according to various embodiments of the present disclosure.

The electronic device 1010 and cradle 1020 of FIG. 10A and FIG. 10B may be an embodiment of an electronic device and cradle similar to or different from the electronic devices 310, 410, 610, 710, 810, and 910 and cradles 320, 420, 520, 720, 820, and 920 of FIG. 3A to FIG. 9B.

Referring to FIG. 10A and FIG. 10B, the electronic device 1010 may be mounted to the cradle 1020 in a state of being rotate by 180 degrees with respect to the mounting direction for wireless charging. According to an embodiment, it may be mounted in such a manner that a rear side of a body 1011 of the electronic device 1010 is attached by a magnetic force to a mounting portion 1022 extended upwardly from a base 1021.

According to various embodiments, the cradle 1020 may include a plurality of magnets 1023, 1024, 1025, 1026, 1027, and 1028. According to an embodiment, among the plurality of magnets 1023, 1024, 1025, 1026, 1027, and 1028, three magnets may be disposed to an upper portion of the mounting portion, and three magnets may be disposed to a lower portion thereof. According to an embodiment, the first magnet 1023 may be disposed to an upper center portion of the mounting portion 1022, and the second magnet 1024 and the third magnet 1025 may be disposed respectively to the left and right of the first magnet 1023. According to an embodiment, the fourth magnet 1026 may be disposed to a lower center portion of the mounting portion 1022, and the fifth magnet 1027 and the sixth magnet 1028 may be disposed respectively to the left and right of the fourth magnet 1025. According to an embodiment, the first magnet 1023 and the fourth magnet 1026 may have the same polarity, and the second magnet 1024, the third magnet 1025, the fifth magnet 1027, and the sixth magnet 1028 may have a polarity different from a polarity of the first and fourth magnets 1023 and 1026.

According to various embodiments, the electronic device 1010 may also include a plurality of magnets 1012, 1013, and 1014. According to an embodiment, when the electronic device 1010 is normally mounted to the cradle 1020 with respect to the mounting direction, the plurality of magnets 1012, 1013, and 1014 may include the first magnet 1012 disposed at a position corresponding to the first magnet 1023 of the cradle 1020 and the second magnet 1013 and third magnet 1014 respectively disposed at positions corresponding to the fifth magnet 1027 and sixth magnet 1028 of the cradle 1020.

According to various embodiments, when the electronic device 1010 is abnormally mounted to the cradle 1020 with respect to the mounting direction for wireless charging (when the electronic device is mounted in a state of being rotated by 180 degrees with respect to the mounting direction), among the plurality of magnets disposed to the cradle 1020, the fourth magnet 1026 may be disposed at a position corresponding to the first magnet 1012 of the electronic device 1010, and the second magnet 1024 and third magnet 1025 of the cradle 1020 may also be disposed at a position of the third magnet 1014 and second magnet 1013 of the electronic device. According an embodiment, the fourth magnet 1026 of the cradle 1020 may be configured to have mutual attraction by disposing a magnet having a polarity different from a polarity of the first magnet 1012 of the electronic device 1010. According to an embodiment, the second magnet 1024 and third magnet 1025 of the cradle 1020 may also be disposed to have mutual attraction by disposing respective magnets having a polarity different from a polarity of the third magnet 1014 and second magnet 1013 of the electronic device 1010.

According to various embodiments, when the electronic device 1010 is mounted to the mounting portion 1022 of the cradle 1020 in a state of being rotated by 180 degrees with respect to the mounting direction, the first magnet 1012 of the electronic device 1010 may correspond to the fourth magnet 1026 of the cradle 1020. According to an embodiment, the first magnet 1012 of the electronic device 1010 and the fourth magnet 1026 of the cradle 1020 may be configured to have mutual attraction by disposing a magnet having a different polarity. According to an embodiment, the third magnet 1014 and second magnet 1013 of the electronic device 1010 may be configured to have mutual attraction by disposing a magnet having a polarity different from a polarity of the second magnet 1024 and third magnet 1025 of the cradle 1020. Therefore, even if the electronic device 1010 is mounted to the cradle 1020 in a state of being rotated by 180 degrees with respect to the mounting direction, positional alignment may be possible for wireless charging in the electronic device 1010 since the three magnets 1012, 1013, and 1014 are attached by an attractive force respectively in accordance with the fourth, third, and second magnets 1026, 1025, and 1024 of the cradle 1020. According to an embodiment, the plurality of magnets 1023, 1024, 1025, 1026, 1027, and 10236 disposed to the cradle 1020 may be disposed such that a corresponding polarity is exhibited in a direction of a wireless charging region of the mounting portion 1022. According to an embodiment, the plurality of magnets 1012, 1013, and 1014 of the electronic device 1010 may be disposed such that a corresponding polarity is exhibited in a direction of the mounting portion 1022 of the cradle 1020 in the electronic device 1010.

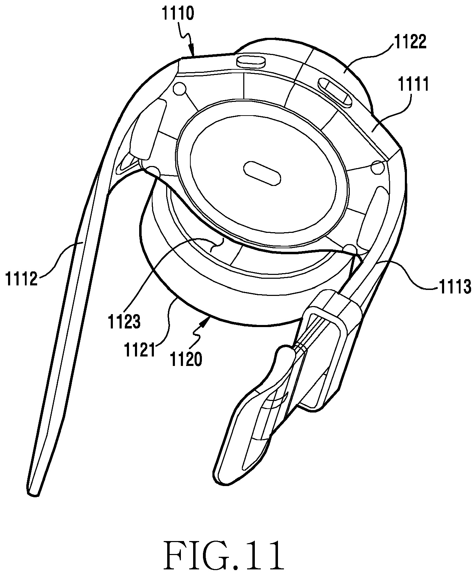

FIG. 11 is a perspective view of an electronic device 1110 in a state of being mounted to a cradle 1120 in a reverse direction according to various embodiments of the present disclosure.

The electronic device 1110 and cradle 1120 of FIG. 11 may be an embodiment of an electronic device and cradle similar to or different from the electronic devices 310, 410, 610, 710, 810, 910, and 1010 and cradles 320, 420, 520, 720, 820, 920, and 1020 of FIG. 3A to FIG. 10B.

Referring to FIG. 11, unlike in the conventional mounting scheme, the electronic device 1110 may be mounted in a reverse direction in which a display is in contact with a mounting portion 1122. In this case, at least one magnet disposed to the electronic device 1110 may be disposed to a bezel or front housing of the electronic device. In this case, since coupling members 1112 and 1113 of the electronic device 1110 are located outwardly without covering a mounting portion 1122, it is possible to guide a smooth mounting operation of the electronic device for charging. According to an embodiment, in this case, the electronic device may be implemented in such a manner that a portion of the wireless charging region of a charging cradle facing a display of the electronic device is open when the electronic device is mounted, thereby being able to be used when the electronic device is charged. According to an embodiment, the electronic device may be implemented by arranging at least one physical input/output device around the mounting portion, and thus various functions can be additionally used even if the electronic device is mounted for wireless charging.

According to various embodiments, two magnets having the same polarity may be placed to the cradle, and a single magnet having a polarity different from a polarity of the magnet of the cradle may be disposed to the electronic device. According to an embodiment, when the electronic device is normally mounted to the cradle with respect to the mounting direction, the magnet of the electronic device may be attached while being aligned by an attractive force to a correct charging position with respect to a single magnet of the cradle. According to an embodiment, when the electronic device is mounted to the cradle by being rotated 180 degrees with respect to the mounting direction, the magnet of the electronic device may be attached by an attractive force to a correct charging position with respect to another single magnet of the cradle.

According to various embodiments, for correct mounting and alignment, a magnet may be installed in the cradle and a metal member which is attracted by a magnetic force of the magnet may be disposed to a corresponding position of the electronic device. However, without being limited thereto, the magnet may be installed in the electronic device, and the metal member which is attracted by a magnetic force of the magnet may be disposed to the corresponding position of the cradle.

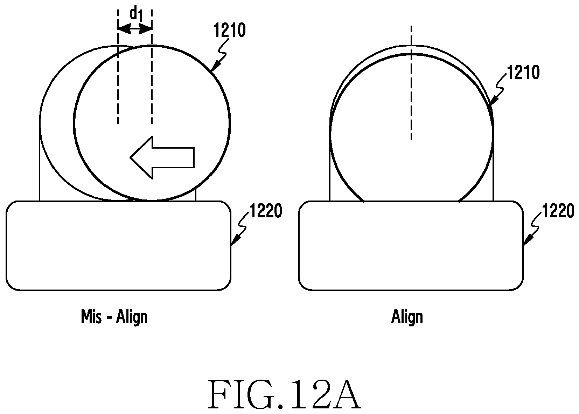

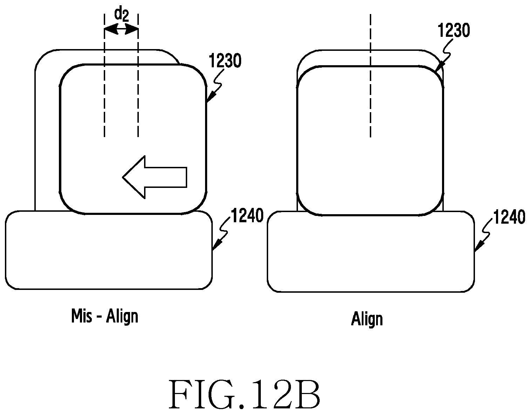

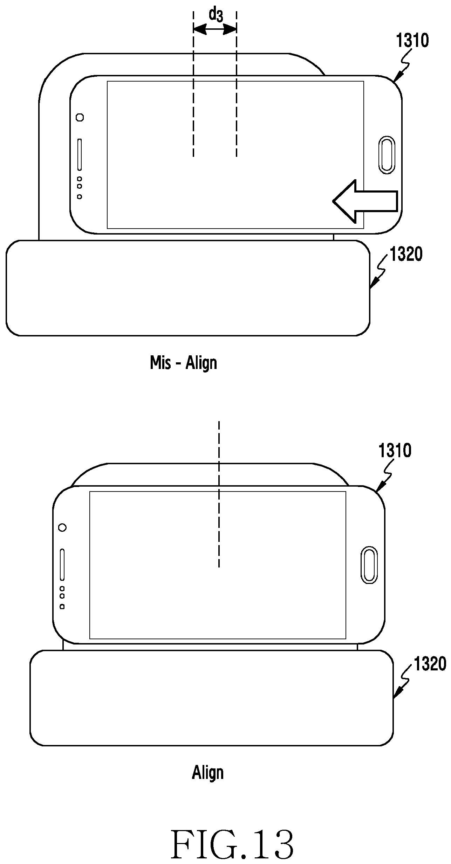

FIG. 12A to FIG. 13 schematically illustrate a state where various shapes of electronic devices 1210, 1230, and 1310 are aligned with cradles 1220, 1240, and 1320 according to various embodiments of the present disclosure.

The electronic devices 1210, 1230, and 1310 and cradles 1220, 1240, and 1320 of FIG. 12A to FIG. 13 may be an embodiment of an electronic device and cradle similar to or different from the electronic devices 310, 410, 610, 710, 810, 910, 1010, and 1110 and cradles 320, 420, 520, 720, 820, 920, 1020, and 1120 of FIG. 3A to FIG. 11.

Referring to FIG. 12A to FIG. 13, the electronic devices 1210, 1230, and 1310 mounted to the cradles 1220, 1240, and 1320 may be aligned to an original position thereof during mounting even in case of being mounted with error distances d1, d2, and d3 having a specific interval, instead of being normally mounted with respect to a mounting direction. As disclosed in the aforementioned exemplary embodiments, this is achieved by disposing a plurality of magnets to the electronic devices 1210, 1230, and 1310 and the cradles 1220, 1240, and 1320 and by guiding the electronic device to a correct wireless charging position of the cradle, based on mutual attractive and repulsive forces between the magnets.

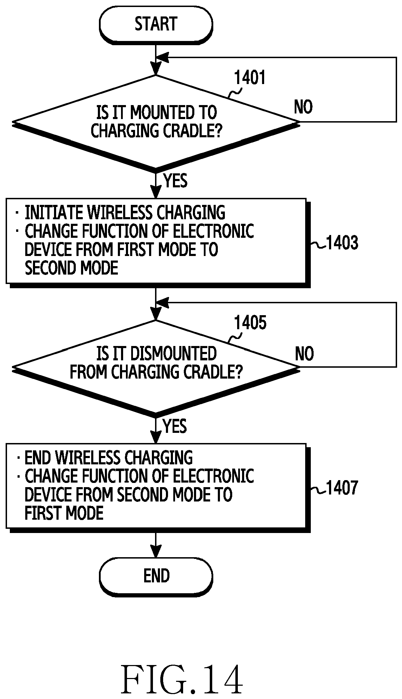

FIG. 14 is a flowchart illustrating an operation of an electronic device, based on whether it is mounted to or dismounted from a cradle according to various embodiments of the present disclosure.

The electronic device and cradle of FIG. 14 may be an embodiment of an electronic device and cradle similar to or different from the electronic devices 310, 410, 610, 710, 810, 910, 1010, 1110, 1210, 1230, and 1310 and cradles 320, 420, 520, 720, 820, 920, 1020, 1120, 1220, 1240, and 1320 of FIG. 3A to FIG. 12.

Referring to FIG. 14, in operation 1401, it may be identified whether the electronic device is mounted to a charging cradle. According to an embodiment, the electronic device may obtain a carrier signal (e.g., a ping signal) generated in a power transmission coil member of the cradle to identify whether the electronic device is mounted to the cradle. According to an embodiment, the electronic device may identify whether the cradle is mounted by means of an additional detection member. According to an embodiment, the detection member may include a hall sensor for obtaining a magnetic force of a magnet. According to an embodiment, the hall sensor may sense the magnetic force of the magnet already mounted to the cradle to attach the electronic device. According to an embodiment, the hall sensor may be configured to sense the magnetic force of the magnet disposed separately to the cradle to sense the hall sensor. According to an embodiment, an operation in which the electronic device is mounted to the cradle may be identified by means of a sensor member (e.g., a pressure sensor, a weight detection sensor, etc.) disposed to an inner portion of the electronic device. According to an embodiment, the electronic device may sense a magnitude of attractive force (e.g., attractive force or the like generated by a magnetic force) generated when the electronic device is mounted to the cradle by means of the sensor member (e.g., the pressure sensor, etc.).

In operation 1403, the electronic device may initiate wireless charging upon identifying that the electronic device is mounted to the cradle. According to an embodiment, the electronic device may include an Over Voltage Protection (OVP) circuit, a Charger IC, a regulator, a D/A converter, a battery, a power reception coil member, or the like. According to an embodiment, a controller (or an additionally provided charging controller) of the electronic device may charge a battery by using power derived from the power reception coil member by controlling the charger IC of the electronic device.

According to various embodiments, upon identifying that the electronic device is mounted to the cradle, in operation 1403, a function of the electronic device may be changed from a first mode to a second mode. According to an embodiment, the electronic device may display wireless charging information through a display while being mounted to the cradle and/or during wireless charging. According to an embodiment, the electronic device may display basic daily-living information (e.g., current time, current temperature, weather, location, etc.) through the display while being mounted to the cradle and/or during wireless charging. According to an embodiment, the electronic device may identify an arrangement state of the electronic device by using at least one motion sensor (e.g., an acceleration sensor, a gyro sensor, etc.) included in the electronic device while being mounted to the cradle and/or during wireless charging, and may allow a UI currently being displayed to rotate in association with the identified arrangement state. According to an embodiment, the electronic device may change a vibration function configured as a notification output means of the electronic device to a sound generation function while being mounted to the cradle and/or during wireless charging. According to an embodiment, the electronic device may change a call reception mode to an auto-answer mode while being mounted to the cradle and/or during wireless charging. According to an embodiment, the electronic device may activate an alarm mode pre-set by a user while being mounted to the cradle and/or during wireless charging. According to an embodiment, the electronic device may be automatically changed from a wake-up mode to a sleep mode while being mounted to the cradle and/or during wireless charging.

When it is identified in operation 1405 that the electronic device is dismounted from the cradle, the electronic device may end wireless charging, and may perform operation 1407 to change the function of the electronic device from the second mode to the first mode.

According to various embodiments, a wearable electronic device may include a housing including a first side and a second side facing the first side, a coupling member coupled to a portion of the housing and configured to detachably couple the electronic device to a portion of a user's body, a display exposed through the first side of the housing, a conductive pattern disposed between the first and second sides of the housing and configured to be able to receive power from the outside in a wirelessly fashion, and a plurality of members disposed around the conductive pattern and attracted by a magnet.

According to various embodiments, when the wearable device is mounted to an external wireless charging cradle, the conductive pattern may receive power from the cradle in a wirelessly fashion.

According to various embodiments, when the wearable device is mounted to the cradle, a plurality of magnets may be disposed at positions corresponding to the plurality of members, and thus the wearable device may be attached to the cradle and a charging position is aligned.

According to various embodiments, the plurality of members may be disposed to be vertically and/or horizontally symmetric in the wearable device, and thus the wearable device may be mounted to the cradle in various directions.

According to various embodiments, the plurality of members may be metal members subject to a magnetic force of a magnet disposed to the cradle.

According to various embodiments, the plurality of members may be magnets. According to an embodiment, the plurality of members may have a polarity opposite to a polarity of a magnet disposed to the cradle to enable the wearable electronic device to be attached to the cradle.

According to various embodiments, the wearable electronic device may be a watch type electronic device worn on a user's wrist.

According to various embodiments, an electronic device configured to enable an external electronic device to be detachably mounted may include a housing, a power interface included in the housing and configured to be able to receive power from an external power source, a conductive pattern electrically coupled to the power interface and configured to be able to transmit power in a wirelessly fashion, and a plurality of members disposed around the conductive pattern and attracted by a magnet.

According to various embodiments, the power interface may include a connecter configured to receive power from the external power source in a wired fashion, and another conductive pattern configured to receive power from the external power source in a wireless fashion.

According to various embodiments, when an external electronic device is mounted to the electronic device, the conductive pattern may transmit power to the external electronic device in a wireless fashion.

According to various embodiments, when the external electronic device is mounted to the electronic device, the external electronic device may have a plurality of magnets disposed at positions corresponding to the plurality of members, and thus the external electronic device may be attached to the electronic device and a charging position is aligned.

According to various embodiments, the plurality of members may be disposed to be vertically and/or horizontally symmetric in the electronic device, and thus the external electronic device may be guided to be mounted to the electronic device in various directions.

According to various embodiments, the plurality of members may be metal members subject to a magnetic force of a magnet disposed to the external electronic device.

According to various embodiments, the plurality of members may be magnets. According to an embodiment, the plurality of members may have a polarity opposite to a polarity of a magnet disposed to the cradle to enable the external electronic device to be attached to the cradle.

According to various embodiments, the external electronic device may be a watch type wearable electronic device worn on a user's wrist, and the electronic device may be a charging cradle to which the wearable electronic device is mounted for wireless charging.

According to various embodiments, a system for wirelessly transmitting/receiving power between electronic devices may include a first electronic device including a first housing, a first conductive pattern disposed inside the first housing and configured to be able to wirelessly transmit power to the outside, and a plurality of first members attracted by a magnet disposed around the first conductive pattern and a second electronic device including a second housing, a second conductive pattern disposed inside the second housing and configured to be able to wirelessly receive power from the outside, and a plurality of second members attracted by a magnet disposed around the second conductive pattern. The system may be configured such that power transmitted through the first conductive pattern of the first electronic device is received by the second electronic device through the second conductive pattern of the second electronic device, and the first electronic device and the second electronic device are arranged to be closely in contact with each other since at least a part of the plurality of first members of the first electronic device and at least a part of the plurality of second members of the second electronic device are attracted to each other by a magnetic force.

According to various embodiments, an electronic device may include a housing including a first side and a second side facing the first side, a display exposed through the first side of the housing, a conductive pattern disposed between the first and second sides of the housing and configured to be able to receive power from the outside in a wirelessly fashion, and a plurality of members disposed along a boundary of the conductive pattern and attracted by a magnet.

According to various embodiments, a wearable electronic device may include a housing including a first side and a second side facing the first side, a coupling member coupled to a portion of the housing and configured to detachably couple the electronic device to a portion of a user's body, a display exposed through the first side of the housing, and a plurality of members disposed between the first and second sides of the housing and attracted by a magnet.

## Claims

1. A wearable electronic device comprising:
a housing comprising a first side and a second side facing away from the first side;
a coupling member coupled to a portion of the housing and configured to detachably couple the wearable electronic device to a portion of a user's body;
a display exposed through the first side of the housing;
a conductive pattern disposed between the first and second sides of the housing and configured to be able to receive power from the outside in a wirelessly fashion; and
a plurality of members disposed around the conductive pattern and attracted by a magnet.

2. The wearable electronic device of claim 1, wherein when the wearable electronic device is mounted to an external wireless charging cradle, the conductive pattern receives power from the cradle in a wirelessly fashion.

3. The wearable electronic device of claim 2, wherein when the wearable electronic device is mounted to the cradle, a plurality of magnets are disposed at positions corresponding to the plurality of members, and thus the wearable electronic device is attached to the cradle and a charging position is aligned.

4. The wearable electronic device of claim 3, wherein the plurality of members are disposed to be vertically and/or horizontally symmetric in the wearable electronic device, and thus the wearable electronic device is mounted to the cradle in various directions.

5. The wearable electronic device of claim 4, wherein the plurality of members are metal members subject to a magnetic force of a magnet disposed to the cradle.

6. The wearable electronic device of claim 4, wherein the plurality of members are magnets.

7. The wearable electronic device of claim 6, wherein the plurality of members have a polarity opposite to a polarity of a magnet disposed to the cradle to enable the wearable electronic device to be attached to the cradle.

8. The wearable electronic device of claim 1, wherein the wearable electronic device is a watch type electronic device worn on a user's wrist.

9. An electronic device configured to enable an external electronic device to be detachably mounted, the electronic device comprising:
a housing;
a power interface comprised in the housing and configured to be able to receive power from an external power source;
a conductive pattern electrically coupled to the power interface and configured to be able to transmit power in a wirelessly fashion; and
a plurality of members disposed around the conductive pattern and attracted by a magnet.

10. The electronic device of claim 9, wherein the power interface comprises a connecter configured to receive power from the external power source in a wired fashion, and another conductive pattern configured to receive power from the external power source in a wireless fashion.

11. The electronic device of claim 9, wherein when an external electronic device is mounted to the electronic device, the conductive pattern transmits power to the external electronic device in a wireless fashion.

12. The electronic device of claim 11, wherein when the external electronic device is mounted to the electronic device, the external electronic device has a plurality of magnets disposed at positions corresponding to the plurality of members, and thus the external electronic device is attached to the electronic device and a charging position is aligned.

13. The electronic device of claim 12, wherein the plurality of members are disposed to be vertically and/or horizontally symmetric in the electronic device, and thus the external electronic device is guided to be mounted to the electronic device in various directions.

14. The electronic device of claim 13, wherein the plurality of members are metal members subject to a magnetic force of a magnet disposed to the external electronic device.

15. The electronic device of claim 14, wherein the plurality of members are magnets.
